# EUROPEAN PATENT SPECIFICATION

(11) **EP 4 019 843 B1**
(45) Date of publication and mention of the grant of the patent: **28.01.2026**
(21) Application number: 20217219.3
(22) Date of filing: 24.12.2020
(51) Int. Cl.: F23R 3/34, F01D 19/00, F02C 9/28

(54) **METHOD FOR SUPPORTING A BLACK GRID RESTORATION BY USING A GAS TURBINE WITH SEQUENTIAL COMBUSTORS**
VERFAHREN ZUR UNTERSTÜTZUNG DER WIEDERHERSTELLUNG EINES ENERGIELOSEN STROMNETZES DURCH VERWENDUNG EINER GASTURBINE MIT SEQUENZIELLEN BRENNKAMMERN
PROCÉDÉ D'AIDE À LA RESTAURATION D'UN RÉSEAU PRIVÉ D'ÉNERGIE EN UTILISANT UNE TURBINE À GAZ AVEC DES CHAMBRES DE COMBUSTION SÉQUENTIELLES

(43) Date of publication of application: 29.06.2022
(73) Proprietor: Ansaldo Energia Switzerland AG, 5400 Baden (CH)
(72) Inventor: CHEN, Duwei, 8953 DIETIKON (CH); JAKOBY, Ralf, 5243 MÜLLIGEN (CH)
(74) Representative: Studio Torta S.p.A.

(56) References cited:
- EP-A1- 2 722 492
- EP-A1- 2 835 516
- EP-A1- 2 873 924
- EP-A1- 3 683 426
- US-B1- 6 202 399

## Description

### Field of the Invention

The present invention relates to the technical field of the gas turbine assemblies for power plants. In particular, the present invention refers to a gas turbine assembly with sequential combustors. Moreover, the problem solved by the present invention refers to how to operate a gas turbine assembly with sequential combustors for supporting a black grid restoration.

### Description of prior art

As known, a gas turbine assembly for power plants comprises a compressor assembly, a combustor assembly and a turbine assembly. The compressor assembly is configured for compressing incoming air supplied at a compressor inlet. The compressed air leaving the compressor assembly flows into a closed volume (called "plenum") and from there into the combustor assembly. This combustor assembly comprises usually a plurality of burners configured for injecting fuel (at least one type of fuel, gaseous or liquid fuel) into the compressed air flow. The mixture of fuel and compressed air

### Field of the Invention

The present invention relates to the technical field of the gas turbine assemblies for power plants. In particular, the present invention refers to a gas turbine assembly with sequential combustors. Moreover, enters a combustion chamber where this mixture ignites. The resulting hot gas flow leaves the combustion chamber and flowing by the turbine assembly performs a rotating work on a rotor connected to a generator. Usually the same rotor supports also the compressor assembly. As known, the turbine assembly comprises a plurality of stages, or rows, of rotating blades that are interposed by a plurality of stages, or rows, of stator vanes. The rotating blades are supported by the rotor whereas the stator vanes are supported by a casing (called "vane carrier") that is concentric and surrounding the turbine assembly.

In order to achieve a high efficiency, the hot gas flow has to have a very high turbine inlet temperature. However, in general this high temperature involves an undesired high NOx emission level. In order to reduce this emission and to increase operational flexibility without decreasing the efficiency, a so called "sequential" gas turbine is particularly suitable. In general, a sequential gas turbine performs two combustion stages in series. Today at least two different kinds of sequential gas turbines are known. According to a first configuration, which is not in line with the present invention as defined by the claims, the gas turbine comprises a first combustor and the second combustor that are annular shaped and are physically separated by a turbine, called high pressure turbine. Downstream the second combustor a second turbine unit is present (called low pressure turbine) . A gas turbine of this type is produced by the Applicant and is available on the market as "GT26".

According to a second configuration of a sequential gas turbine, the gas turbine is not provided with the high-pressure turbine and the combustor assembly is realized in form of a plurality of can-combustors wherein each can-combustor comprises a first combustor and a second combustor arranged directly one downstream the other inside a common casing can-shaped. Also a gas turbine of this type is produced by the Applicant and is available on the market as "GT36".

As known, the compressor is provided with variable inlet guide vanes (VIGV), that is an adjustable vane provided at the entrance of the compressor in order to regulate the amount of air entering into the compressor. At their position of maximum opening, the variable inlet guide vanes allow entrance of the maximum air mass flow into the compressor and at their position of minimum opening the variable inlet guide vanes allow entrance of the minimum amount of air mass flow into the compressor. The gas turbine power can thus be modulated by regulating the variable inlet guide vane position as well as the injected fuel flow rate into the combustors. The fuel split (consequently the load split) between the first and second combustor is controlled by characteristic parameters like combustor and turbine inlet and exit temperatures.

After a grid blackout, for supporting the grid restoration the prior art practice suggests to operate the gas turbine according to the following steps. Initially, the gas turbine power plant is started to idle or house load(here and after, "idle" refers to the operation where the gas turbine is operated at nominal speed but does not export power to the auxiliary equipment of the gas turbine and the power plant; "house load" refers to the operation where the gas turbine is operated at nominal speed and exports power to the auxiliary equipment of the gas turbine and the power plant but does not connect to the external grid with load consumers.) by operating only the first combustor until the acceleration of the rotor reaches the nominal speed. After this the gas turbine plant is connected to the external grid. A step-wise switching on of consumer loads occurs in the next phase where the load rises from the minimum load up to a baseload. In the early phase of this step wherein energy is forwarded to the grid, the second combustor is not operated. Only after the early phase of loading, i.e. after reaching a defined inlet air temperature, the second combustor is brought into operation.

This prior art practice involves some drawbacks, in particular in terms of an instable combustion in the second combustor and not being able to export power fast enough to stabilize the grid with load consumers in a timely manner due to the ignition preparation time of the second combustor.

EP3683426, EP2722492, US6202399 disclose methods for operating a gas turbine having a first and a second combustor. EP3683426 and EP2722492 explicitly refer to the problem of the black grid restoration, i.e. how to restoring a grid after a blackout by means a gas turbine assembly for power plant.

### Disclosure of the invention

Accordingly, a primary object of the present invention is to provide a gas turbine assembly suitable for overcoming the above cited problem of the prior art. Thus, the present invention refers to a method for operating a gas turbine assembly for power plant, in particular a method for restoring a grid after a blackout by means a gas turbine assembly for power plant. The main steps of the method are:
a) providing a sequential gas turbine assembly comprising in series a first combustor assembly and a second combustor assembly;
b) operating the first combustor in idle/house load use until the inlet air temperature into the second combustor reaches a threshold;
c) only once this temperature is reached, operating the second combustor in idle/house load use;
d) only after both combustors are stably operated, switching the gas turbine assembly in consumer use.

Please notice that the terms "idle/house load -use" and "consumer-use" are well known by the skill person in the art. As above mentioned, contrary to the prior art practice, both combustors are operated before switching the gas turbine assembly in consumer use and therefore the grid restoration is quick and stable.

The step b) is performed so that the inlet turbine temperature reaches the predefined threshold that is sufficiently high to perform a stable auto-ignition combustion in the second combustor.

The control of the air flow rate flowing in the gas turbine, in particular in the first and second combustors, and the control of the inlet turbine temperature may be performed by controlling the variable inlet compressor vane and/or by providing the gas turbine with a bleed valve configured to adjust air flow rate leaving the compressor and bypassing the combustors.

The present method is implemented by a gas turbine having a plurality of can combustors wherein each can combustor is performing the first combustion stage and the second combustion stage.

It is to be understood that both the foregoing general description and the following detailed description are exemplary and are intended to provide further explanation of the invention as claimed. Other advantages and features of the invention will be apparent from the following description, drawings and claims.

The features of the invention believed to be novel are set forth with particularity in the appended claims.

### Brief description of drawings

Further benefits and advantages of the present invention will become apparent after a careful reading of the detailed description with appropriate reference to the accompanying drawings.

The invention itself, however, may be best understood by reference to the following detailed description of the invention, which describes an exemplary embodiment of the invention, taken in conjunction with the accompanying drawings, in which:
- figure 1 is a schematic view of a gas turbine assembly for power plants not part of the invention; and
- figure 2 is a schematic view of an example of gas turbine assembly for power plants suitable for implementing the method of the present invention.

### Detailed description of preferred embodiments of the invention

In cooperation with attached drawings, the technical contents and detailed description of the present invention are described thereinafter according to preferred embodiments, being not used to limit its executing scope. Any equivalent variation and modification made according to appended claims is all covered by the claims claimed by the present invention.

Reference will now be made to the drawing figures to describe the present invention in detail.

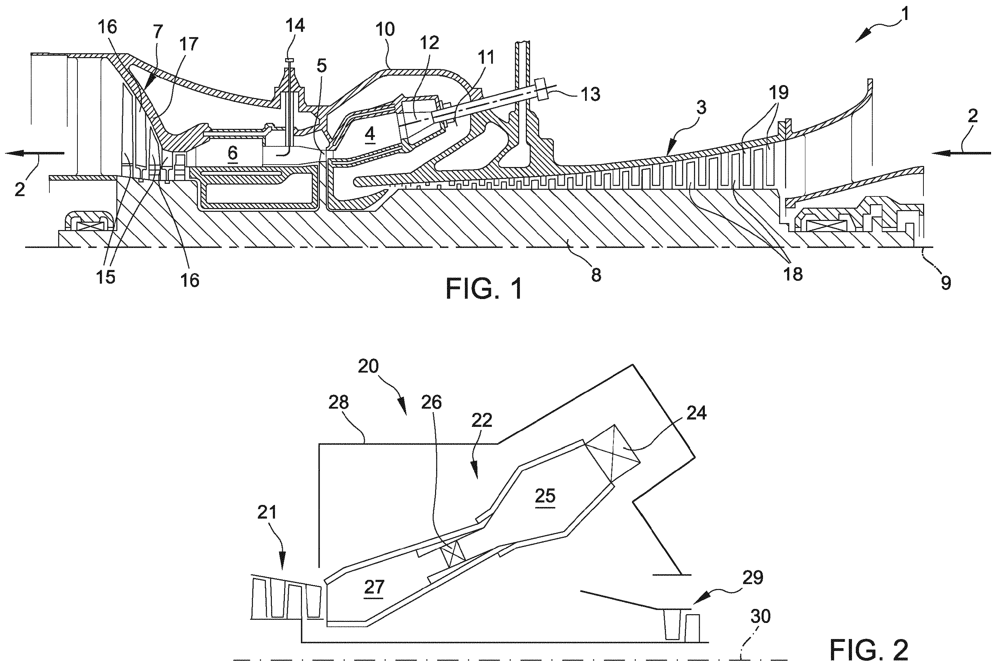

Reference is now made to Fig. 1 that is a schematic view a gas turbine 1 not part of the invention. In particular, figure 1 discloses a sequential gas turbine with a high pressure and a low pressure turbine. Following the main flow 2, the gas turbine 1 of figure 1 comprises a compressor 3, a first combustion stage, a high-pressure turbine 5, a second combustion stage and a low-pressure turbine 7. The compressor 3 and the two turbines 5, 7 are connected to a common rotor 8 rotating around an axis 9 and surrounded by a concentric casing 10. The compressor 3 is supplied with air and is provided with rotating blades 18 and stator vanes 19 configured for compressing the air entering the compressor 3. The compressed air leaving the compressor flows into a plenum 11 and from there into a plurality of first burners 12 where this compressed air is mixed with fuel supplied by a first fuel supply 13. The fuel/compressed air mixture flows into a first combustion chamber 4 where this mixture are ignited and combusted. The resulting hot gas leaves the first combustor chamber 4 and drives the high-pressure turbine 5 performing work on the rotor 8. Downstream of the high-pressure turbine 5 the gas partially expanded flows into a plurality of second burners where additional fuel is supplied by second fuel source 14. The partially expanded gas has a high temperature and contains sufficient oxygen for a further combustion that, based on a self-ignition, takes place in a second combustion chamber 6 arranged downstream the second burners. The reheated gas leaves the second combustion chamber 6 and flows in the low-pressure turbine 7 for performing rotating work on the rotor 8. The low-pressure turbine 7 comprises a plurality of stages, or rows, of rotor blades 15 arranged in series in the main flow direction. Such stages of blades 15 are interposed by stages of stator vanes 16. The rotor blades 15 are connected to the rotor 8 whereas the stator vanes 16 are connected to a vane carrier 17 that is a concentric casing surrounding the low-pressure turbine 7. Each burner of this example is configured for injecting different kinds of fuel, namely gaseous fuel and liquid fuel, i.e. each burner comprises a plurality of nozzles configured for injecting gaseous fuel and connected to a gaseous fuel source and a plurality of nozzles configured for injecting liquid fuel and connected to a liquid fuel source.

Reference is now made to Fig. 2 that is a schematic view of an example of a gas turbine that can implement the method of the present invention. In particular, figure 2 discloses a sequential gas turbine 20 provided with a compressor 29, an only a turbine 21 and a sequential combustor arrangement 22. The sequential combustor arrangement 22 of figure 2 comprises a plurality of can combustors wherein each can combustor comprises first burners 24, a first combustion chamber 25, a second burner 26, and a second combustion chamber 27. The first burner 24, the first combustion chamber 25, the second burner 26 and the second combustion chamber 27 are arranged sequentially in a fluid flow connection. The sequential combustor is housed in a combustor can casing 28 of a plurality of cans arranged as a ring around the turbine axis. A first fuel (gaseous or liquid fuel) is introduced via a first fuel injector (not shown) into the first burner 24 wherein the fuel is mixed with the compressed gas supplied by the compressor 29. A second fuel (gaseous or liquid fuel) is introduced into the second burner 26 via a second fuel injector (not shown) and mixed with hot gas leaving the first combustion chamber 25. The hot gas leaving the second combustion chamber 27 drives the turbine 21 performing work on a rotor 30.

The method for restoring a grid after a blackout by means a gas turbine assembly for power plant, comprises the steps described in claim 1.

## Claims

1. A method for restoring a grid after a blackout by means of a gas turbine assembly for power plant; the method comprising the steps of:
a) providing a sequential gas turbine assembly (20) comprising a in series a first combustor assembly (25), performing a first combustion stage and a second combustor assembly (27) performing a second combustion stage;
b) operating the first combustor in idle/house load use until the inlet air temperature of the second combustor reaches a threshold;
c) once reached the inlet air temperature threshold operating the second combustor in idle/house load use;
d) once both combustors are operated switching the gas turbine assembly in consumer use;
wherein the step b) is performed so that the inlet air temperature of the second combustor is sufficiently high to perform an auto-ignition combustion in the second combustor; wherein the step a) is performed by providing a gas turbine having a plurality of can combustors, each can combustor performing the first combustion stage and the second combustion stage.

2. Method according to claim 1, wherein during the step c) the air flow rate is controlled so that the combustion in the second combustor is stable.

3. Method according to claim 2, wherein the control of the air flow rate flowing in the first and second combustors is performed by controlling the variable inlet compressor vane.

4. Method according to claim 2 or 3, wherein the control of the air flow rate flowing in the first and second combustors is performed by providing the gas turbine with a bleed valve configured to adjust air flow rate leaving the compressor and bypassing the combustors.

## Patentansprüche

1. Verfahren zur Wiederherstellung eines Stromnetzes nach einem Stromausfall mittels einer Gasturbinenanordnung für ein Kraftwerk; wobei das Verfahren die folgenden Schritte umfasst:
a) Bereitstellen einer sequentiellen Gasturbinenanordnung (20), die in Reihe eine erste Brennkammeranordnung (25), die eine erste Verbrennungsphase durchführt, und eine zweite Brennkammeranordnung (27) umfasst, die eine zweite Verbrennungsphase durchführt;
b) Betreiben der ersten Brennkammer in der Leerlauf/Eigenbedarf-Verwendung, bis die Einlasslufttemperatur der zweiten Brennkammer einen Schwellenwert erreicht;
c) sobald der Einlasslufttemperatur-Schwellenwert erreicht ist, Betreiben der zweiten Brennkammer in der Leerlauf/Eigenbedarf-Verwendung;
d) sobald beide Brennkammern betrieben werden, Schalten der Gasturbinenanordnung auf die Verbraucherverwendung;
wobei der Schritt b) derart durchgeführt wird, dass die Einlasslufttemperatur der zweiten Brennkammer ausreichend hoch ist, um eine Selbstzündungsverbrennung in der zweiten Brennkammer durchzuführen;
wobei der Schritt a) mittels Bereitstellens einer Gasturbine durchgeführt wird, die eine Vielzahl von Rohrbrennkammern aufweist, wobei jede Rohrbrennkammer die erste Verbrennungsphase und die zweite Verbrennungsphase durchführt.

2. Verfahren nach Anspruch 1, wobei während des Schritts c) die Luftströmungsrate derart geregelt wird, dass die Verbrennung in der zweiten Brennkammer stabil ist.

3. Verfahren nach Anspruch 2, wobei die Regelung der Luftströmungsrate in der ersten und der zweiten Brennkammer mittels Regelns der verstellbaren Verdichtereinlassleitschaufel durchgeführt wird.

4. Verfahren nach Anspruch 2 oder 3, wobei die Regelung der Luftströmungsrate in der ersten und der zweiten Brennkammer mittels Versehens der Gasturbine mit einem Ablassventil durchgeführt wird, das dazu ausgestaltet ist, eine Luftströmungsrate anzupassen, die den Verdichter verlässt und die Brennkammern umgeht.

## Revendications

1. Procédé de restauration d'un réseau après une panne d'électricité au moyen d'un ensemble turbine à gaz pour centrale électrique ; le procédé comprenant les étapes de :
a) fourniture d'un ensemble turbine à gaz séquentiel (20) comprenant un premier ensemble chambre de combustion en série (25), réalisant une première phase de combustion et un deuxième ensemble chambre de combustion (27) réalisant une deuxième phase de combustion ;
b) fonctionnement de la première chambre de combustion en usage ralenti/en îlotage jusqu'à ce que la température d'air d'entrée de la deuxième chambre de combustion atteigne un seuil ;
c) une fois que le seuil de température d'air d'entrée est atteint, fonctionnement de la deuxième chambre de combustion en usage ralenti/en îlotage ;
d) une fois que les deux chambres de combustion sont en fonctionnement, commutation de l'ensemble turbine à gaz en usage domestique ;
dans lequel l'étape b) est réalisée de telle sorte que la température d'air d'entrée de la deuxième chambre de combustion est suffisamment élevée pour réaliser une combustion par auto-inflammation dans la deuxième chambre de combustion ;
dans lequel l'étape a) est réalisée en fournissant une turbine à gaz ayant une pluralité de chambres de combustion tubulaires, chaque chambre de combustion tubulaire réalisant la première phase de combustion et la deuxième phase de combustion.

2. Procédé selon la revendication 1, dans lequel pendant l'étape c) le débit d'air est commandé de telle sorte que la combustion dans la deuxième chambre de combustion est stable.

3. Procédé selon la revendication 2, dans lequel la commande du débit d'air s'écoulant dans les première et deuxième chambres de combustion est réalisée en commandant l'aube d'entrée variable de compresseur.

4. Procédé selon la revendication 2 ou 3, dans lequel la commande du débit d'air s'écoulant dans les première et deuxième chambres de combustion est réalisée en dotant la turbine à gaz d'une vanne de purge configurée pour réguler le débit d'air quittant le compresseur et contournant les chambres de combustion.
